Europäisches Patentamt

European Patent Office

Office européen des brevets

(11) Veröffentlichungsnummer: **0 184 714**
**B1**

(12) # EUROPÄISCHE PATENTSCHRIFT

(45) Veröffentlichungstag der Patentschrift:
27.09.89

(51) Int. Cl.⁴: **G 03 G 9/08**, G 03 G 9/14,
H 01 F 1/37

(21) Anmeldenummer: 85114961.7

(22) Anmeldetag: 26.11.85

(54) **Gefärbte magnetische Toner, Verfahren zu deren Herstellung und ihre Verwendung.**

(30) Priorität: 08.12.84 DE 3444869

(43) Veröffentlichungstag der Anmeldung:
18.06.86 Patentblatt 86/25

(45) Bekanntmachung des Hinweises auf die Patenterteilung:
27.09.89 Patentblatt 89/39

(84) Benannte Vertragsstaaten:
BE CH DE FR GB IT LI NL SE

(56) Entgegenhaltungen:
FR-A- 2 472 771

PATENT ABSTRACTS OF JAPAN, Band 8, Nr. 105
(P-274)[1542], 17. Mai 1984 & JP-A-59 15 257

(73) Patentinhaber: BAYER AG,
D-5090 Leverkusen 1 Bayerwerk (DE)

(72) Erfinder: Wiese, Jürgen, Dr., Husarenallee 1,
D-4150 Krefeld (DE)
Erfinder: Buxbaum, Gunter, Dr., Holzapfelweg 2,
D-4150 Krefeld (DE)

## Beschreibung

Die vorliegende Erfindung betrifft gefärbte magnetische Toner, bestehend aus Bindemittel, Farbmittel und magnetisierbarem Material, Verfahren zu ihrer Herstellung sowie die Verwendung dieser Toner.

Toner sind die farbgebende Komponente der heute weitverbreiteten elektrostatischen Fotokopiersysteme. Üblicherweise werden schwarze Toner verwendet. Schwarze magnetische Toner enthalten als magnetisierbare Substanz Eisenpulver, Chromdioxid, gamma-Eisenoxid, Magnetit oder Ferritpulver.

Um bunte Fotokopien herstellen zu können, ist man bemüht, auch bunte Toner einzusetzen. Im Falle der magnetischen Einkomponententoner für Fotokopierverfahren oder Magnetdrucker erweist sich die üblicherweise vorhandene starke Eigenfarbe der magnetisierbaren Komponente der Toner als Hindernis, farbreine bunte Toner herzustellen.

In der EP-A 00 75 346 wird zur Aufhebung dieses Nachteils ein kompliziertes Verfahren zur Abdeckung der Eigenfarbe eines magnetisierbaren Kerns durch Umhüllung mit der farbgebenden Komponente vorgeschlagen.

Ein weiterer Vorschlag für die Herstellung roter oder brauner Toner ist die Verwendung alpha-eisenoxidhaltigen gamma-Eisenoxids gemäß DE-A 33 13788. Ein Nachteil dieses Verfahrens ist es, daß derartiges durch nichtmagnetisches alpha-Eisenoxid magnetisch verdünntes gamma-Eisenoxid eine niedrigere magnetische Sättigung als reines gamma-Eisenoxid aufweist. Es wird deshalb eine größere Menge erforderlich verglichen mit reinem gamma-Eisenoxid, um ein bestimmtes magnetisches Verhalten des Toners zu erreichen.

In der DE-A 33 15 005 wird darüber hinaus vorgeschlagen, vorzugsweise durch Sinterung hergestellte magnetische Teilchen mit mittlerem Durchmesser von 0,5–3,5 µm einzusetzen. Nachteilig ist bei dem genannten Vorschlag, daß eine relativ breite Teilchengrößenverteilung erhalten wird, so daß auch Anteile farbstarker kleiner Pigmentteilchen vorhanden sind.

Aus PA of Japan. Band 8, Nr. 105 (P-274), 1542, Mai 1984, geht die Verwendung von hexagonal flachen Plättchen aus Eisenoxid als magnetisierbarem Material in einer Tonermischung hervor.

Die Aufgabe der vorliegenden Erfindung ist es daher, einen bunten magnetischen Toner zur Verfügung zu stellen, der es erlaubt, Fotokopien oder Magnetdrucke mit Farben hoher Sättigung herzustellen.

Überraschenderweise wurde nun gefunden, daß im Falle von plättchen- bzw. schuppenförmiger magnetisierbarer Teilchen bestimmter Teilchengröße als magnetische Komponente eines Einkomponententoners dessen Farbe nur unwesentlich durch die Eigenfarbe des Magnetikums, sondern durch die zugesetzten farbstarken Farbmittel bestimmt wird.

Gegenstand der vorliegenden Erfindung ist somit ein gefärbter magnetischer Toner, bestehend aus Bindemittel, Farbmittel und aus plättchen- oder schuppenförmigen magnetischen Teilchen bestehendem magnetisierbarem Material, wobei die magnetischen Teilchen die Zusammensetzung $FeO_x$ haben, wobei $1,33 \leq x \leq 1,5$ ist und der Durchmesser der Plättchen bzw. Schuppen zwischen 0,5 und 26 µm und ihr Durchmesser/Dicke-Verhältnis $\geq 5$ beträgt.

Als plättchenförmige magnetisierbare Teilchen können insbesondere solche aus Eisen oder Ferrit (z.B. Bariumferrit) eingesetzt werden. Als Ausgangsverbindung für die Herstellung eines derartigen Eisenoxids ist plättchenförmiges alpha-Eisenoxid geeignet. Dieses ist in Form von natürlichem Waldensteiner Glimmer (micaceous iron oxide) verfügbar. Wesentlich bessere Ergebnisse sind aber zu erhalten, wenn synthetisches plättchenförmiges alpha-Eisenoxid eingesetzt wird, wie es z.B. in der DE-A 30 19 404 und in der EP-A 00 14 382 beschrieben ist.

Das plättchenförmige alpha-Eisenoxid kann durch Reduktion mit Reduktionsmitteln, vorzugsweise mit Wasserstoff bei 250–600 °C, in Magnetit unter Erhalt der Form überführt werden. Das so erhaltene magnetische Pigment kann direkt als magnetische Komponente in den erfindungsgemäßen Tonern eingesetzt werden.

Der Durchmesser der im erfindungsgemäßen Toner eingesetzten magnetischen Teilchen liegt oberhalb der optimalen Teilchengröße von Farbpigmenten, er beträgt vorzugsweise zwischen 0,5 und 25 µm, das Durchmesser/Dicke-Verhältnis beträgt vorzugsweise $\geq 5$. Dabei ist es vorteilhaft, solche magnetischen Teilchen einzusetzen, die möglichst wenig kleine Teilchen enthalten und eine enge Teilchengrößenverteilung aufweisen.

Weiterhin sollten diese Teilchen während ihrer Herstellung nicht oder nur wenig versintert sein, was sich nachteilig auf ihre Dispergierbarkeit auswirken könnte. Sie lassen sich dann mühelos in ein Bindemittel oder eine Bindemittellösung ohne besonderen Aufwand an Dispergierenergie durch einfaches Einrühren in einen guten Dispergierzustand überführen.

Als Bindemittel in den erfindungsgemäßen Toners werden solche eingesetzt, die Polymere oder Copolymere auf Basis Polystyrol, Polyester, Polymethacrylat oder Polyethylen enthalten, wie sie unter anderem in der DE-A 33 15 005 aufgeführt sind.

Als Farbmittel im Sinne dieser Erfindung ist eine Vielzahl von organischen und/oder anorganischen Farbmitteln geeignet, wie sie unter anderem in der DE-A 33 15 005 und der EP-A 00 75 346 beschrieben sind.

Besonders bevorzugt ist es, wenn dem Toner zur Steigerung der Streuung mindestens ein Weißpigment mit hohem Streuvermögen zugesetzt wird.

Besonders gute Resultate werden mit Tonern erzielt, in denen die magnetischen Teilchen die Zusammensetzung $FeO_x$ mit $1,4 \leq x \leq 1,5$ aufweisen. Der Einsatz dieses Oxides als magnetisierbare Komponente führt zu helleren, gesättigten Farben, besonders bei gelben, grünen und blauen Tonern.

Die erfindungsgemäßen Toner werden hergestellt durch Vermischen von magnetisierbaren Teilchen, Farbmitteln und Bindemitteln, wobei vorzugsweise Mischaggregate mit geringer Scherkraftentwicklung eingesetzt werden. Dabei geht man vorteilhaft so vor, daß die Farbmittel und die magnetisierbaren Teilchen dem Bindemittel zugesetzt werden.

Die erfindungsgemäßen Toner sind besonders geeignet für die Verwendung in elektrostatischen Fotokopiersystemen und Magnetdruckern.

Im folgenden wird die Erfindung beispielhaft erläutert, ohne daß darin eine Einschränkung zu sehen ist.

Die farbliche Beurteilung der Pigmentmischungen erfolgt dabei nach Einarbeiten in einem Bindemittel und Herstellen eines Lackabzuges nach den Normen DIN 6174 und 55 985, da die farbmetrische Beurteilung von Pulvern schlecht reproduzierbare Ergebnisse liefert. Die ermittelten Kenngrößen L (Helligkeit) und C (Sättigung) dienen zur eindeutigen farblichen Beurteilung der Pigmentmischung, wobei eine Farbe mit größerer Sättigung bzw. Helligkeit einen brillanten visuellen Eindruck erzeugt.

In den folgenden Beispielen sind einige Farbmittel ausgewählt worden, die den bevorzugten Farbbereich charakterisieren. Aus der oben angegebenen Liste der Farbmittel kann der Fachmann weitere geeignete Farbmittel auswählen. Als geeignetes Weißpigment wird in den Beispielen ein handelsübliches, leicht dispergierbares Titandioxidpigment mit Rutilstruktur (Bayertitan R-KB-2, Handelsprodukt der Bayer AG) eingesetzt. Es können auch andere stark streuende Weißpigmente (Titandioxid-Anatas, Zinksulfid) zur Anwendung kommen.

Beispiel 1
Herstellung des plättchenförmigen magnetischen Materials

Als Ausgangsmaterial wurde plättchenförmiges alpha-Eisenoxid gemäß EP-A 00 14 382 eingesetzt. Es hat eine spezifische Oberfläche ($N_2$-Adsorption, BET-Methode) von 1 m²/g. Der mittlere Teilchendurchmesser beträgt etwa 10 µm, die Dicke der Teilchen 0,05 µm.

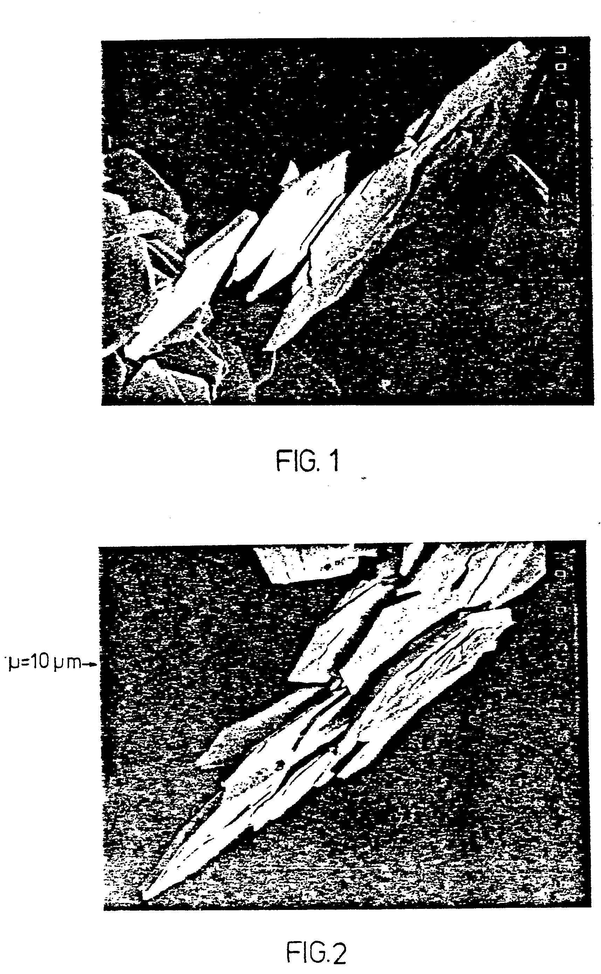

Aus dem alpha-Eisenoxid wurde durch Reduktion mit feuchtem Wasserstoff bei 400 °C in 90 min ein Magnetit hergestellt, der anschließend zur Erreichung des gewünschten Bronzetones mit Luft bei 260 °C in 180 min oxidiert wurde. Der FeO-Gehalt des Endproduktes beträgt 10 Gew.-%, was der Zusammensetzung $FeO_{1,445}$ entspricht. Die spezifische Oberfläche des Vorproduktes und die Teilchengröße ist beim Endprodukt erhalten geblieben. Eine rasterelektronenmikroskopische Aufnahme ist in Fig. 1 wiedergegeben. Die magnetischen Eigenschaften des Endproduktes sind durch die Koerzitivkraft von 488 Oe und die magnetische Sättigung von 370 G cm³/g gekennzeichnet.

Beispiel 2
Herstellung der Pigmentmischung

Die Präparation der Mischung aus dem plättchenförmigen magnetischen Material, einem Farbmittel und einem Weißpigment erfolgte durch trockenes gemeinsames Vermahlen in einer Schwingmühle (Dismembrator der Firma Braun/Melsungen, Teflonmahlbehälter mit 2 Achatkugeln) während 1 min. Es können auch andere Mahl- bzw. Mischaggregate eingesetzt werden. Es ist jedoch darauf zu achten, daß die Plättchen bei der Mahlung nicht zerstört werden.

Für die verschiedenen Farben wurden in der Pigmentmischung eingesetzt:

a. Blau
1,84 g plättchenförmiges Material nach Beispiel 1
1,6 g Weißpigment (Bayertitan R-KB-2/Handelsprodukt der Bayer AG)
0,34 g Heliogenblau K 7080 (Handelsprodukt der BASF AG)

b. Grün
1,84 g plättchenförmiges Material nach Beispiel 1
1,6 g Weißpigment (Bayertitan R-KB-2/Handelsprodukt der Bayer AG)
0,17 g Heliogengrün 8680 (Handelsprodukt der BASF AG)
0,17 g Paliotolgelb K 0961 HD (Handelsprodukt der BASF AG)

c. Gelb
1,84 g plättchenförmiges Material nach Beispiel 1
1,6 g Weißpigment (Bayertitan R-KB-2/Handelsprodukt der Bayer AG)
0,17 g Paliotolgelb K 2141 HD (Handelsprodukt der BASF AG)
0,17 g Paliotolgelb K 0961 HD (Handelsprodukt der BASF AG)

d. Rot
1,84 g plättchenförmiges Material nach Beispiel 1
0,8 g Weißpigment (Bayertitan R-KB-2/Handelsprodukt der Bayer AG)
0,68 g Paliogenrot 3911 K (Handelsprodukt der BASF AG).

Beispiel 3
Herstellung der Pigmentmischung ohne Mahlung

Um die gute Dispergierbarkeit des erfindungsgemäßen magnetischen Materials nach Beispiel 1 zu zeigen, wurde eine Pigmentmischung wie im Beispiel 2 c durch einfaches Vermischen mit einem Spatel hergestellt.

Beispiel 4
Herstellung eines Lackabzuges für die farbmetrische Beurteilung

1 g der Pigmentmischung nach Beispiel 2 bzw. 3 wurde in 4 g Bindemittel (Alkydal F 48, Handelsprodukt der Bayer AG) eingerührt und mit 2 × 100 Umdrehungen ohne Belastung auf einer Tellerfarbenanreibemaschine der Firma Engelsmann vermischt. Mit Hilfe eines Abziehlineals wurde dann auf weißem Karton ein Lackabzug von 90 µm Filmdicke hergestellt. Der Lackfilm trocknete vor der Messung 24 h.

Beispiel 5
Farbmetrische Beurteilung

Die farbmetrische Beurteilung der Lackabzüge nach Beispiel 4 wurde gemäß DIN 6174 mittels eines Spektral-Farbmeßgerätes (Macbeth, Kollmorgen Corp., USA) durchgeführt. Die Meßgeometrie war diffus/8° ohne Glanzausschaltung. Für die Helligkeit H und die Sättigung C wurden die Werte ermittelt, die in der Tabelle 1 aufgeführt sind. Die Tabelle enthält auch die Daten der Vergleichsbeispiele A und B.

Aus den Werten ist zu ersehen, daß die Vergleichsbeispiele nahezu überall deutlich schlechter abschneiden. Um dies zu verdeutlichen, wurden die Differenzbeträge von Helligkeit und Sättigung der Vergleichsbeispiele gegenüber der erfindungsgemäßen Variante aufgeführt ($\Delta L^*$, $\Delta C^*$).

Die ungemahlene Probe nach Beispiel 3 schneidet sogar besser ab als die gemahlene nach Beispiel 2 c. Hier zeigt sich die hervorragende Dispergierbarkeit des erfindungsgemäßen magnetischen plättchenförmigen Materials.

Vergleichsbeispiel A

Zu Vergleichszwecken wurde aus einem handelsüblichen magnetischen Tonerpigment – Bayferrox 8610/Handelsprodukt der Bayer AG – durch Temperung und Reduktion ein grobteiliger Magnetit hergestellt. Bayferrox 8610 wurde bei 700 °C 30 min lang unter Luft getempert und anschließend bei 400 °C 120 min mit feuchtem Wasserstoff reduziert. Das entstandene Pigment ist durch folgende Daten charakterisiert:

Koerzitivkraft:     285 Oe
spezifische Sättigung:     1006 Gcm³/g
FeO-Gehalt:     31 Gew.-%

Mit diesem Pigment wurden Pigmentmischungen entsprechend Beispiel 2a–d hergestellt.

Vergleichsbeispiel B

Das magnetische Material nach Vergleichsbeispiel A wurde 120 min bei 280 °C unter Luft oxidiert.

Koerzitivkraft:     178 Oe
spezifische Sättigung:     787 Gcm³/g
spezifische Oberfläche:     3,3 m²/g
FeO-Gehalt:     0,4 Gew.-%

Mit diesem Pigment als magnetischer Komponente wurden Pigmentmischungen entsprechend dem Beispiel 2a–d hergestellt. Eine Mischung ohne Vormahlung entsprechend Beispiel 3 wurde ebenfalls präpariert (Be).

Tabelle 1

| Pigmentmischung nach Beispiel | Helligkeit L* | Sättigung C* | [Vergleich mit Bezugsprobe] | | Farbton |
|---|---|---|---|---|---|
| | | | $\Delta L^*$ | $\Delta C^*$ | |
| A | 36,2 | 16,0 | 0 | 0 | blau |
| B | 37,6 | 15,8 | + 1,4 | − 0,2 | |
| 2a | 43,4 | 28,0 | + 7,2 | + 12,0 | |
| A | 41,2 | 8,4 | 0 | 0 | grün |
| B | 45,7 | 9,7 | + 4,5 | + 1,3 | |
| 2b | 54,3 | 25,9 | + 13,1 | + 17,5 | |
| A | 41,1 | 7,7 | 0 | 0 | gelb |
| B | 49,2 | 22,0 | + 8,1 | + 14,3 | |
| 2c | 59,3 | 32,2 | + 18,2 | + 24,5 | |
| A | 32,2 | 10,6 | 0 | 0 | rot |
| B | 37,1 | 27,5 | + 4,9 | + 16,9 | |
| 2d | 39,3 | 27,3 | +7,1 | + 16,7 | |
| A | 42,0 | 7,8 | 0 | 0 | gelb |
| B | 47,5 | 17,7 | + 5,5 | + 9,9 | |
| 3 | 67,1 | 36,0 | + 19,1 | + 28,2 | |

## Patentansprüche

1. Gefärbter magnetischer Toner, bestehend aus Bindemittel, Farbmittel und aus plättchen- oder schuppenförmigen magnetisierbaren Teilchen bestehendem magnetisierbarem Material, dadurch gekennzeichnet, daß die magnetischen Teilchen die Zusammensetzung $FeO_x$ haben, wobei $1{,}33 \leq x \leq 1{,}5$ ist und der Durchmesser der Plättchen bzw. Schuppen zwischen 0.5 und 26 µm und ihr Durchmesser/Dickeverhältnis $\geq 5$ beträgt.

2. Toner gemäß Anspruch 1, dadurch gekennzeichnet, daß farbstarke organische und/oder anorganische Farbmittel und mindestens ein Weißpigment mit hohem Streuvermögen zugesetzt werden.

3. Toner gemäß einem der Ansprüche 1 oder 2, dadurch gekennzeichnet, daß bevorzugt brillante gelbe, grüne und/oder blaue organische und/oder anorganische Farbmittel und magnetische Teilchen der Zusammensetzung $FeO_x$ mit $1{,}4 \leq x \leq 1{,}5$ enthalten sind.

4. Verfahren zur Herstellung der magnetischen Toner gemäß einem der Ansprüche 1 bis 3 durch Vermischen von magnetisierbaren Teilchen, Farbmitteln und Bindemitteln, dadurch gekennzeichnet, daß Mischaggregate mit geringer Scherkraftentwicklung eingesetzt werden.

5. Verwendung der Toner gemäß einem der Ansprüche 1 bis 3 in elektrostatischen Fotokopiersystemen und Magnetdruckern.

## Claims

1. Coloured magnetic toner consisting of binder, colouring agent and magnetisable material consisting of platelet-shaped or scale-like magnetisable particles, characterised in that the magnetic particles have the composition $FeO_x$, where $1.33 \leq x \leq 1.5$, and the diameter of the platelets or scales is between 0.5 and 26 µm and their diameter/thickness ratio is $\geq 5$.

2. Toner according to Claim 1, characterised in that organic and/or inorganic colouring agents with high colouring power and at least one white pigment with high scattering power are added.

3. Toner according to one of Claims 1 or 2, characterised in that preferably brilliant yellow, green and/or blue organic and/or inorganic colouring agents and magnetic particles having the composition FeO$_x$, where $1.4 \leq x \leq 1.5$, are contained therein.

4. Process for the preparation of the magnetic toners according to one of Claims 1 to 3 by mixing magnetisable particles, colouring agents and binders, characterised in that mixing apparatuses developing only a low shearing force are used.

5. Use of the toners according to one of Claims 1 to 3 in electrostatic photocopying systems and magnetic printers.

**Revendications**

1. Toner magnétique coloré constitué d'un agent liant, d'un agent colorant et d'une matière magnétisable formée de particules magnétisables sous forme de plaquettes ou d'écailles, caractérisé en ce que les particules magnétiques ont la composition FeO$_x$, $1,33 \leq x \leq 1,5$, tandis que le diamètre des plaquettes ou des écailles se situe entre 0,5 et 26 μm, tandis que leur rapport diamètre/épaisseur est $\geq 5$.

2. Toner selon la revendication 1, caractérisé en ce qu'on ajoute des agents colorants organiques et/ou inorganiques de couleur forte et au moins un pigment blanc ayant un haut pouvoir de dispersion.

3. Toner selon une des revendications 1 ou 2, caractérisé en ce qu'il contient des agents colorants organiques et/ou inorganiques bleus et/ou verts, de préférence, jaune brillant, ainsi que des particules magnétiques de la composition FeO$_x$, $1,4 \leq x \leq 1,5$.

4. Procédé de préparation des toners magnétiques selon une des revendications 1 à 3, par mélange de particules magnétisables de colorants et d'agents liants, caractérisé en ce qu'on utilise des groupes de mélange développant une faible force de cisaillement.

5. Utilisation des toners selon une des revendications 1 à 3 dans des systèmes de photocopie électrostatiques et des appareils d'impression magnétiques.

FIG. 1

μ=10 μm→

FIG.2